Europäisches Patentamt

European Patent Office

Office européen des brevets

(11) Publication number: **0 073 839**
**B1**

(12) **EUROPEAN PATENT SPECIFICATION**

(45) Date of publication of patent specification: **20.08.86**

(21) Application number: **82900828.3**

(22) Date of filing: **16.03.82**

(86) International application number:
**PCT/JP82/00069**

(87) International publication number:
. **WO 82/03301 30.09.82 Gazette 82/23**

(51) Int. Cl.⁴: **H 02 P 5/34, H 02 P 6/02**

(54) **CONTROL DEVICE FOR SYNCHRONOUS MOTOR.**

(30) Priority: **16.03.81 JP 37377/81**

(43) Date of publication of application:
. **16.03.83 Bulletin 83/11**

(45) Publication of the grant of the patent:
**20.08.86 Bulletin 86/34**

(84) Designated Contracting States:
**DE FR GB SE**

(56) References cited:
**DE-A-2 900 976**
**DE-A-2 915 987**
**JP-A-49 025 411**
**JP-A-52 006 921**
**JP-A-54 116 625**
**JP-A-55 100 075**
**JP-A-57 034 786**
**JP-B-53 026 284**
**US-A-3 483 457**

(73) Proprietor: **FANUC LTD**
**3580, Shibokusa Aza-Komanba Oshino-mura**
**Minamitsuru-gun Yamanashi 401-05 (JP)**

(72) Inventor: **ISHIDA, Hiroshi**
**2-2-73, Matsubara-cho Hamura-machi**
**Nishitama-gun Tokyo 190-11 (JP)** ·

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to an apparatus for controlling a synchronous motor, and more particularly to an apparatus for controlling a synchronous motor in which a rotating magnetic field is produced.

Synchronous motors with a rotating magnetic field include an armature as a stator and field poles as a rotor. By applying a three-phase AC voltage to the stator winding (armature winding), a rotating magnetic field is generated which attracts the field poles to cause the latter to rotate at the same speed as that of travel of the rotating magnetic field.

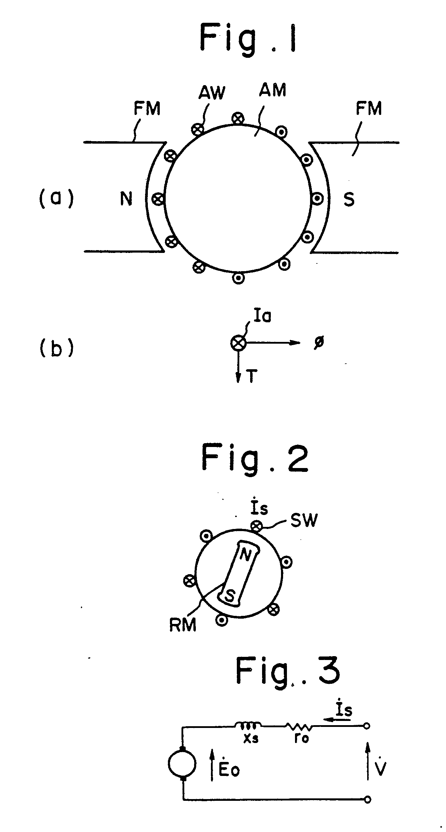

As shown in Figs. 1(a) and 1(b), the mechanism of producing a torque in a DC shunt-wound machine is that an armature current Ia is switched by a commutator so as to flow in a direction normal to a main magnetic flux $\phi$ at all times. The torque T generated is expressed by the following equation, the torque T being proportional to the armature current Ia if the main magnetic flux $\phi$ is constant.

$$T = k\phi Ia \qquad (1)$$

Designated in Fig. 1 at FM are field poles, AM an armature, and AW armature windings.

If the foregoing relationship is applied to a synchronous motor with a revolving magnetic field as shown in Fig. 2, then the main magnetic flux $\phi$ corresponds to a vector $\phi s$ of a main magnetic flux produced by field poles PM, and the armature current Ia to a vector Is of a current flowing through armature windings SW. A torque T generated by the synchronous motor is given by:

$$T = k'\phi s \, Is \cos \gamma \qquad (2)$$

where $\gamma$ is the phase difference between an armature current Is and an induced voltage Eo in an equivalent circuit of the synchronous motor as shown in Fig. 3. Designated in Fig. 3 at $r_o$ is the resistance of the armature windings SW, and Xs the synchronous reactance taking an armature reaction and an armature leakage flux into consideration.

When the induced voltage Eo and the armature current Is are in phase with each other, that is, the main magnetic flux $\phi s$ and the armature current Is are controlled so as to be perpendicular to each other, the torque T as expressed by the equation (2) can be given as follows:

$$T = k'\phi s \, Is \qquad (3)$$

The synchronous motor can therefore be driven in a manner equivalent to generation of a torque by a DC motor.

Two examples of prior attempts to utilize this principle can be found in JP—A—54 116 625 and DE—A—2 915 987. The latter document discloses a control apparatus for a synchronous motor which can be taken as a starting point for the present invention and which discloses the features of the preamble of present claim 1.

According to the present invention there is provided a control apparatus for a rotary magnetic field three-phase synchronous motor, comprising a DC voltage source, an inverter for supplying three-phase AC currents from the DC voltage source to armature windings of the synchronous motor, an error amplifier for amplifying the difference between a motor speed command voltage and a motor actual-speed voltage, a position detecting means for generating signals dependent upon the position of field poles of the synchronous motor, multiplier circuits for multiplying an output from said error amplifier with signals from said position detecting means to provide commanded phase currents, current transformers for detecting respective actual phase currents to the synchronous motor, and arithmetic circuits for computing the differences between actual and commanded phase currents to the synchronous motor, the outputs of these arithmetic circuits being employed in the control of said inverter, the apparatus being characterised in that:

transistors comprised in said inverter can be turned on and off in dependence upon said outputs of said arithmetic circuits to pass current in-phase with an induced voltage for thereby bringing an actual speed into conformity with a command speed;

said position detecting means is a two-phase device for generating sin $\theta$ and cos $\theta$ dependent on the position $\theta$ of said field poles of the synchronous motor;

there are two corresponding said multiplier circuits for receiving sin $\theta$ and cos $\theta$ respectively as well as said speed voltage difference; and

there is a two-phase to three-phase converter which converts the two signals from these two respective multiplier circuits into corresponding three-phase signals which are fed to three respective ones of said arithmetic circuits as commanded phase currents; and

there are two current transformers for sensing two actual phase currents to the synchronous motor, the third actual phase current being provided by combining the outputs of these two current transformers in an arithmetic unit; and these three actual phase currents having their values fed to respective ones of said three arithmetic circuits.

A preferred embodiment of the present invention may provide an apparatus for controlling a synchronous motor, by which the speed of rotation of the synchronous motor can easily be controlled, and instantaneous values of a stator current (armature current) can be controlled to produce a torque equivalent to that which is generated by a DC motor, for thereby effecting fine highly responsive motor control.

This may be achieved by detecting the phase of an induced voltage Eo from a main magnetic flux, that is, the positions of field poles on the basis of the fact that the induced voltage Eo is 90 degrees out of phase with the main magnetic flux, producing a current command having the same phase as that of the induced voltage, and applying the current command to armature windings of a synchronous motor for thereby controlling the latter to be driven in a manner equivalent to that for driving a DC motor.

For a better understanding of the present invention, and to show how it may be put into effect, reference will now be made by way of example to the accompanying drawings in which:

Fig. 1 is a set of diagrams explanatory of the principles of torque generation in a DC shunt-wound machine;

Fig. 2 is a diagram illustrative of a synchronous motor having a rotating magnetic field;

Fig. 3 is a circuit diagram of an equivalent circuit of the synchronous motor;

Fig. 4 is a block diagram of a circuit according to the present invention;

Fig. 5 is a diagram illustrative of a resolver;

Fig. 6 is a set of diagrams showing the waveforms of resolver outputs;

Fig. 7 is a circuit diagram of a two-phase-to-three-phase converter;

Fig. 8 is a circuit diagram of a pulse-width-modulation circuit; and

Fig. 9 is a set of diagrams illustrating operation of the pulse-width-modulation circuit.

Figures 1 to 3 have already been described.

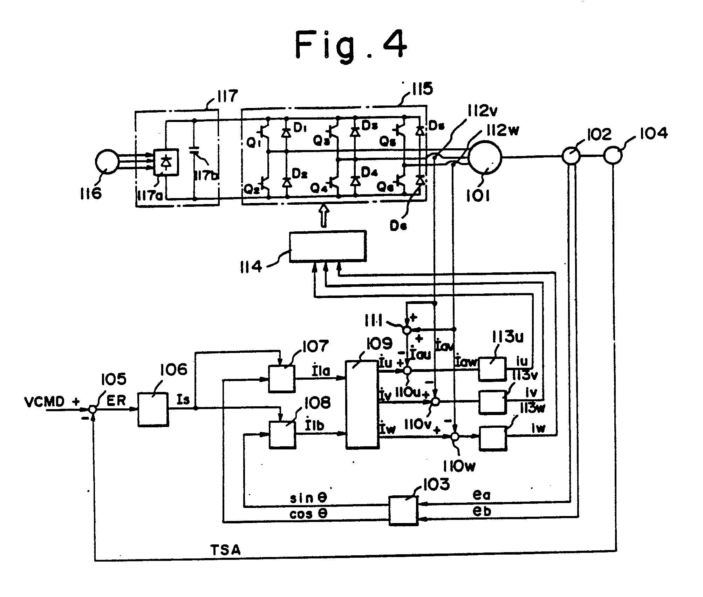

Fig. 4 is a block diagram of a circuit for carrying out a method of controlling a synchronous motor according to the present invention.

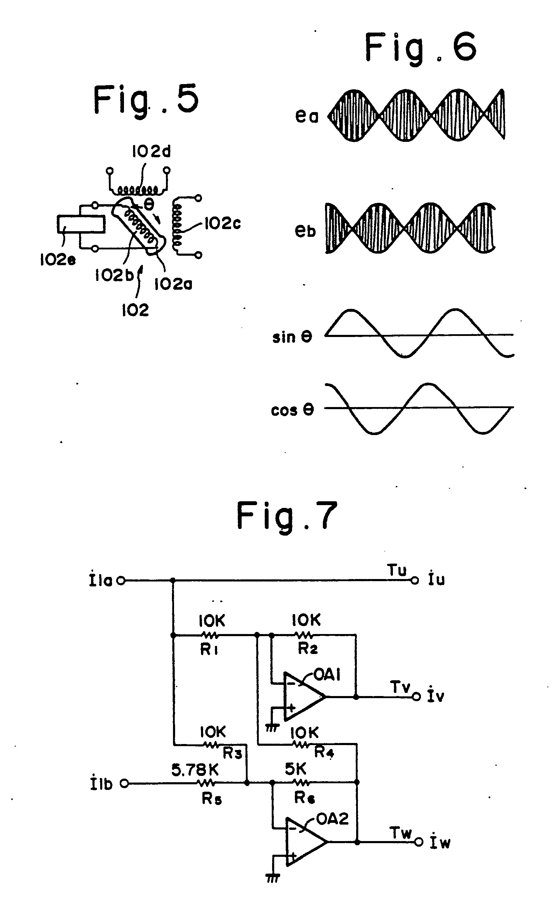

Indicated at 101 is a synchronous motor with a rotating magnetic field, and 102 a resolver coupled to a shaft of the synchronous motor. As shown in Fig. 5, the resolver has a rotor 102a, a rotor winding 102b, two stator windings 102c, 102d disposed 90° out of phase with each other, and a carrier generator circuit 102e for generating a carrier of sin wt. When the rotor 102 is positioned at an angle $\theta$, the stator windings 102c, 102d produce voltages which are expressed respectively as follows:

$$ea = \sin \theta . \sin wt \quad (4)$$

$$eb = \cos \theta . \sin wt \quad (5)$$

Therefore, the resolver 102 produces a sine voltage ea and a cosine voltage eb dependent on the angular position $\theta$ of the field poles of the synchronous motor 101. A synchronous rectifier circuit 103 rectifies the sine voltage ea and the cosine voltage eb in synchronism to generate sin $\theta$ and cos $\theta$ (Fig. 6). A tachometer generator 104 produces an actual-speed voltage TSA proportional to the speed of rotation of the synchronous motor 101. Designated at 105 is an arithmetic circuit for determining the difference ER (hereinafter referred to as a "speed error") between a speed command voltage VCMD commanded by a speed command circuit (not shown) and the actual-speed voltage TSA, 106 an error amplifier for amplifying the speed error ER to produce an amplitude Is of an armature current, 107, 108 multipliers for multiplying the output from the error amplifier with the outputs cos $\theta$, sin $\theta$ from the synchronous rectifier circuit 103 to produce two-phase current commands ila (=Is sin $\theta$), ilb (=Is cos $\theta$), and 109 a two-phase-to-three-phase converter for converting a two-phase signal into a three-phase signal. As illustrated in Fig. 7, the two-phase-to-three-phase converter 109 has two operational amplifiers OA1, OA2, resistors R1 through R4 of 10 K$\Omega$, a resistor R5 of 5.78 K$\Omega$, and a resistor R6 of 5 K$\Omega$. With the resistors R1—R6 having such resistances and wired as shown, the following outputs are available from terminals Tu, Tv, Tw:

$$\left.\begin{array}{l} iu = ila \\[2mm] iv = -\dfrac{1}{2} ila + \dfrac{3}{2} ilb \\[2mm] iw = -\dfrac{1}{2} ila - \dfrac{3}{2} ilb \end{array}\right\} \quad (6)$$

The outputs iu, iv, iw are $2\pi/3$ out of phase with each other, and constitute three-phase current commands in phase with the induced voltage Eo.

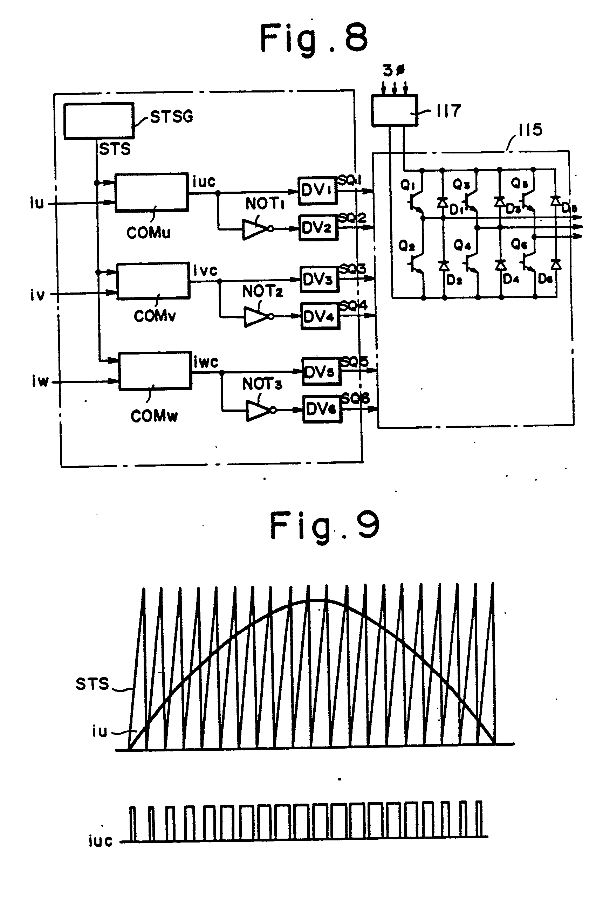

Indicated at 110U, 110V, 110W are arithmetic circuits in the respective phases for determining the differences between the command currents iu, iv, iw and actual phase currents iau, iav, iaw, 111 an arithmetic circuit for adding iav and iaw to produce the phase current iau of a phase U, 112V, 112W current transformers for detecting the phase currents iav, iaw of phases V, W, respectively, 113U, 113V, 113W current amplifiers in respective phases for amplifying current differences in the phases, 114 a pulse-width modulation circuit, 115 an inverter controllable by an output signal from the pulse-width-modulation circuit, 116 a three-phase AC power supply, and a known rectifier circuit 117 for rectifying three-phase alternating currents into a direct current, the rectifier circuit being composed of a group of diodes 117a and a capacitor 117b. As illustrated in Fig. 8, the pulse-width-modulation circuit 114 comprises a sawtooth generator STSG for generating a sawtooth signal STS, comparators COMu, COMv, COMw, NOT gates NOT1—NOT3, and drivers DV1—DV6. The inverter 115 has six power transistors Q1—Q6 and six diodes D1—D6. The comparators COMu, COMv, COMw in the pulse-width-modulation circuit 114 compare the amplitudes of three-phase AC signals iu, iv, iw with the amplitude of the sawtooth signal STS, and delivers an output of "1" when the signals iu, iv, iw are larger than the signal STS, and delivers an output of "0" when the signals iu, iv, iw are smaller than the signal STS. For example, the comparator COMu for the signal iu produces a current command iuc as shown in Fig. 9, which is subjected to pulse width modulation. Therefore, three-phase current commands iuc, ivc, iwc are generated dependent on the amplitudes of the signals iu, iv, iw by way of pulse width modulation. The current commands iuc, ivc, iwc are converted by the NOT gates NOT1—NOT3 and the driver circuits DV1—DV6 into drive signals SQ1—SQ6, which serve to turn on and off the power transistors Q1—Q6 in the inverter 115.

Operation of the embodiment shown in Fig. 4 will now be described with reference to an application in which a speed command is increased when the synchronous motor 101 rotates at a certain speed.

To rotate the synchronous motor at a desired speed Vc, an addition terminal of the arithmetic circuit 105 is supplied with a speed command voltage VCMD having a preset analog value. The synchronous motor rotates at an actual speed Va ($<$Vc) at this time, and the tachometer generator 104 produces as an output an actual-speed voltage TSA proportional to the actual speed Va, the actual-speed voltage TSA being applied to a subtraction terminal of the arithmetic circuit. The arithmetic circuit determines a speed error ER which is the difference between the command speed Vc and the actual speed Va, and supplies the speed error ER to the error amplifier 106, which then effects an arithmetic operation of proportional integration as expressed by the following equation:

$$Is=K1 (Vc-Va)+K2 \; \Sigma(Vc-Va) \\ \Sigma(Vc-Va)=\Sigma(Vc-Va)+(Vc-Va) \Bigg\} \quad (7)$$

The result Is in the equation (7) corresponds to the amplitude of the armature current. Accordingly, when the load varies or the speed command changes, the speed error ER ($=Vc-Va$) becomes greater, and the armature current amplitude Is also becomes greater. The increased armature current amplitude results in a greater torque produced, which brings the actual speed of rotation of the motor into conformity with the command speed.

The two-phase sine and cosine waves sin θ, cos θ which are indicative of positions (at the angle θ) of the field poles of the synchronous motor are produced by the resolver 102 and the synchronous rectifier circuit 103. The multiplier circuits 107, 108 carry out the following arithmetic operations:

$$IIa=Is \cdot sin \; θ, \; IIb=Is \cdot cos \; θ,$$

and produce two-phase current commands IIa, IIb. Then, the two-phase-to-three-phase converter circuit 109 effects the arithmetic operations as defined by the equations (6) and generate three-phase current commands iu, iv, iw, respectively, which are in phase with the induced voltage Eo in the synchronous motor 101.

Thereafter, the arithmetic circuits 110U, 110V, 110W determine the differences between the three-phase current commands iu, iv, iw and

actual phase currents iau, iav, iaw. Three-phase AC signals iu, iv, iw indicative of such differences are amplified by the current amplifiers 113U, 113V, 113W and applied respectively to the comparators COMu, COMv, COMw in the pulse-width-modulation circuit 114. The comparators COMu, COMv, COMw compare the amplitudes of the three-phase AC signals iu, iv, iw with the amplitude of the sawtooth signal STS, and deliver as outputs three-phase current commands iuc, ivc, iwc produced by way of pulse width modulation. The outputs from the comparators are supplied to the NOT gates NOT1—NOT3 and the drivers DV1—DV6, which generate inverter drive signals SQ1—SQ6. The inverter drive signals SQ1—SQ6 are supplied to the bases of the power transistors Q1—Q6, respectively, in the inverter 115 to turn on and off the power transistors Q1—Q6 for supplying three-phase currents to the synchronous motor 101. The synchronous motor 101 will subsequently be controlled in a similar mode until the motor will eventually rotate at the command speed.

According to the present invention, as described above, a synchronous motor can be controlled in a manner equivalent to that of controlling a DC motor by detecting the phase of an induced voltage Eo in the synchronous motor, generating a current command having such a phase, and applying the current command to armature windings of the synchronous motor.

The present invention effects momentary control of an armature current to generate a torque through a mechanism equivalent to that of torque generation by a DC motor, for fine, highly responsive control of the speed of rotation of a synchronous motor, which can be driven for synchronous operation at all times without step-out or operation out of synchronism even when a load torque changes. The present invention is applicable to operation of a variety of loads which should be rotated at accurate speeds.

**Claims**

1. A control apparatus for a rotary magnetic field three-phase synchronous motor (101), comprising a DC voltage source (117), an inverter (115) for supplying three-phase AC currents from the DC voltage source (117) to armature windings of the synchronous motor (101), an error amplifier (106) for amplifying the difference between a motor speed command voltage (VCMD) and a motor actual-speed voltage (TSA), a position detecting means (102) for generating signals dependent upon the position of field poles of the synchronous motor (101), multiplier circuits (107, 108) for multiplying an output from said error amplifier (106) with said signals from said position detecting means (102) to provide commanded phase currents, current transformers (112v, 112w) for detecting respective actual phase currents to the synchronous motor (101), and arithmetic circuits (110u, 110v, 110w) for computing the differences between actual and commanded phase currents to the synchronous motor (101), the outputs of these arithmetic circuits (110u, 110v, 110w) being employed in the control of said inverter (115), the apparatus being characterised in that:

transistors (Q1 to Q6) comprised in said inverter (115) can be turned on and off in dependence upon said outputs of said arithmetic circuits (110u, 110v, 110w) to pass current in-phase with an induced voltage for thereby bringing an actual speed into conformity with a command speed;

said position detecting means (102) is a two-phase device for generating sin θ and cos θ dependent on the position θ of said field poles of the synchronous motor (101);

there are two corresponding said multiplier circuits (107, 108) for receiving sin θ and cos θ respectively as well as said speed voltage difference;

there is a two-phase to three-phase converter (109) which converts the two signals from these two respective multiplier circuits (107, 108) into corresponding three-phase signals which are fed to three respective ones of said arithmetic circuits (110u, 110v, 110w) as commanded phase currents; and

there are two current transformers (112v, 112w) for sensing two actual phase currents to the synchronous motor (101), the third actual phase current being provided by combining the outputs of these two current transformers (112v, 112w) in an arithmetic unit (111), and these three actual phase currents having their values fed to respective ones of said three arithmetic circuits (110u, 110v, 110w).

2. An apparatus according to claim 1 and comprising current amplifiers (113u, 113v, 113w) for amplifying the outputs from said arithmetic circuits (110u, 110v, 110w).

3. An apparatus according to any preceding claim, comprising a pulse-width-modulation circuit (114) for controlling the inverter (114) in dependence upon the outputs of said arithmetic circuits (110u, 110v, 110w).

## Patentansprüche

1. Steuergerät für einen Synchronmotor, nämlich einen Drehmagnetfeld-Dreiphasen-Synchronmotor (101), mit einer Gleichspannungsquelle (117), einem Wechselrichter (115) zum Ausgeben von Dreiphasen-Wechselströmen aus der Gleichspannungsquelle (117) an Ankerwicklungen des Synchronmotors (101), einem Abweichungssignalverstärker (106) zum Verstärken eines Drehzahlspannungsdifferenzsignals für die Differenz zwischen einer Motor-Solldrehzahl-Steuerspannung (VCMD) und einer Motor-Istdrehzahl-Signalspannung (TSA), einem Positionserfassungsmittel (102) zum Erzeugen von Signalen in Abhängigkeit von der Position der Feldpole des Synchronmotors (101), Multiplizierschaltungen (107, 108) zum Multiplizieren eines Ausgangssignals des Abweichungssignalverstärkers (106) mit den Signalen aus dem Positionserfassungsmittel (102), um Sollphasenströme zu erzeugen, Stromwandler (112v, 112w) zum Erfassen der jeweiligen Istphasenströme, die in den Synchronmotor (101) hineinfließen, und arithmetischen Schaltungen (110u, 110v, 110w) zum Berechnen der Differenzen zwischen den Istphasenströmen und den Sollphasenströmen, die in den Synchronmotor (101) hineinfließen sollen, wobei die Ausgangssignale dieser arithmetischen Schaltungen (110u, 110v, 110w) zur Steuerung des Wechselrichters (115) benutzt werden, dadurch gekennzeichnet:

daß Transistoren (Q1 ..., Q6), die in dem Wechselrichter (115) enthalten sind, in Abhängigkeit von den Ausgangssignalen der arithmetischen Schaltungen (110u, 110v, 110w) ein- und ausgeschaltet werden können, um Strom in Phase mit einer induzierten Spannung durchzuschalten, um dadurch eine Istdrehzahl in Übereinstimmung mit einer Solldrehzahl zu bringen, daß das Positionserfassungsmittel (102) eine Zweiphasen-Einrichtung zum Erzeugen eines Signals sin θ und eines Signals cos θ abhängig von der Position θ der Feldpole des Synchronmotors (101) ist,

daß zwei korrespondierende der Multiplizierschaltungen (107, 108) zum Aufnehmen sowohl des Signals sin θ bzw. des Signals cos θ als auch des Drehzahlspannungsdifferenzsignals vorgesehen sind,

daß ein Zweiphasen-/Dreiphasen-Umsetzer (109) vorgesehen ist, der die beiden Signale aus diesen beiden Multiplizierschaltungen (107, 108) in korrespondierende Dreiphasen-Signale umsetzt, welche jeweils einer betreffenden der arithmetischen Schaltungen (110u, 110v, 110w) als Signale für Sollphasenströme zugeführt werden, und

daß zwei Stromwandler (112v, 112w) zum Erfassen zweier Istphasenströme, die in den Synchronmotor (101) hineinfließen, vorgesehen sind, wobei der dritte Istphasenstrom durch Kombinieren der Ausgangssignale dieser beiden Stromwandler (112v, 112w) in einer arithmetischen Einheit (111) erzeugt wird und wobei die Werte dieser drei Istphasenströme jeweils einer betreffenden der drei arithmetischen Schaltungen (110u, 110v, 110w) zugeführt werden.

2. Steuergerät nach Anspruch 1, bei dem Stromverstärker (113u, 113v, 113w) zum Verstärken der Ausgangssignale aus den arithmetischen Schaltungen (110u, 110v, 110w) vorgesehen sind.

3. Steuergerät nach einem der vorhergehenden Ansprüche, bei dem eine Pulsbreitenmodulationsschaltung (114) zum Steuern des Wechselrichters (115) in Abhängigkeit von den Ausgangssignalen der arithmetischen Schaltungen (110u, 110v, 110w) vorgesehen ist.

## Revendications

1. Dispositif de commande pour un moteur synchrone triphasé (101) à champ magnétique tournant, comprenant une source de tension continue (117), un convertisseur (115) pour fournir des courants alternatifs triphasés aux enroulements d'induit du moteur synchrone (101) à partir de la source de tension continue (117), un amplificateur d'erreur (106) pour amplifier la différence entre une tension de consigne de vitesse du moteur (VCMD) et une tension de vitesse réelle du moteur (TSA), un moyen de détection de position (102) pour engendrer des signaux dépendant de la position des pôles inducteurs du moteur synchrone (101), des circuits multiplicateurs (107, 108) pour multiplier une sortie de l'amplificateur d'erreur (106) avec des signaux provenant du moyen de détection de position (102), pour fournir des courants de phase de consigne, des transformateurs de courant (112v, 112w) pour détecter les courants de phase réels respectifs vers le moteur synchrone (101), et des circuits arithmétiques (110u, 110v, 110w) pour calculer les différences entre les courants de phase réels et de consigne vers le moteur synchrone (101), les sorties de ces circuits arithmétiques (110u, 110v, 110w) étant utilisées dans la commande du convertisseur (115), l'appareil étant caractérisée en ce que:

des transistors (Q1 à Q6) inclus dans ledit convertisseur (115) peuvent être rendus passants et bloqués en fonction des sorties des circuits arithmétiques (110u, 110v, 110w) pour faire passer le courant en phase avec une tension induite, pour ainsi amener une vitesse réelle en conformité avec une vitesse de consigne;

le moyen de détection de position (102) est un appareil biphasé pour engendrer sin θ et cos θ en fonction de la position θ desdits pôles inducteurs du moteur synchrone (101);

il existe deux circuits multiplicateurs correspondants (107, 108) pour recevoir sin θ et cos θ, respectivement, ainsi que la différence des tensions de vitesse;

il existe un convertisseur de deux phases en trois phases (109) qui convertit les deux signaux provenant de ces deux circuits multiplicateurs (107, 108) en des signaux triphasés correspondants qui sont appliqués à trois circuits arithmétiques respectifs (110u, 110v, 110w) en tant que courants de phase de consigne; et

il existe deux transformateurs de courant (112v, 112w) pour capter les deux courants de phase réels vers le moteur synchrone (101), le troisième courant de phase réel étant obtenu en combinant les sorties de ces deux transformateurs de courant (112v, 112w) dans une unité arithmétique (111), et ces trois courants de phase réels ayant leur valeur appliquée aux trois circuits arithmétiques respectifs (110u, 110v, 110w).

2. Dispositif selon la revendication 1, comprenant des amplificateurs de courant (113u, 113v, 113w) pour amplifier les sorties des circuits arithmétiques (110u, 110v, 110w).

3. Dispositif selon l'une des revendications précédentes, comprenant un circuit modulateur de largeur d'impulsion (114) pour commander le convertisseur (115) en fonction des sorties des circuits arithmétiques (110u, 110v, 110w).

# Fig . 1

(a)

(b)

# Fig . 2

# Fig . 3

# Fig. 4

# Fig.5

# Fig.6

# Fig.7

# Fig.8

# Fig.9